# EUROPÄISCHE PATENTSCHRIFT

(11) **EP 0 535 766 B1**
(45) Veröffentlichungstag und Bekanntmachung des Hinweises auf die Patenterteilung: **22.05.1996**
(21) Anmeldenummer: 92250216.6
(22) Anmeldetag: 13.08.1992
(51) Int. Cl.: H02B 13/035

(54) **Metallgekapselte Hochspannungsanlage**
Metal clad, high-voltage installation
Installation blindée à haute tension

(30) Priorität: 30.09.1991 DE 4133089
(43) Veröffentlichungstag der Anmeldung: 07.04.1993
(73) Patentinhaber: SIEMENS AKTIENGESELLSCHAFT, D-80333 München (DE)
(72) Erfinder: Kliche, Horst, W-1000 Berlin 20 (DE); Wagner, Eckard, W-1000 Berlin 20 (DE)

(56) Entgegenhaltungen:
- DE-U- 6 946 693
- CONFERENCE RECORD OF 1985 ANNUAL PULP AND PAPER INDUSTRY TECHNICAL CONFERENCE 26. April 1985, HOUSTON, TEXAS, Seiten 11 - 16, HARRO M. LUEHRMANN: 'DESIGN AND RELIABILITY OF HIGH VOLTAGE SUBSTATIONS, GIS VERSUS CONVENTIONAL'

## Beschreibung

Die Erfindung liegt auf dem Gebiet der Energieverteilung und befaßt sich mit der konzeptionellen Ausgestaltung einer Hochspannunganlage, die u. a. eine dreiphasige, rohrförmig gekapselte Sammelschiene oder eine Sammelschiene aus drei einzeln rohrförmig gekapselten Phasenleitern aufweist.

Es ist bekannt, Hochspannungsanlagen, welche aktive Bausteine wie Trenn-, Last- und Leistungsschalter sowie Zusatzkomponenten wie Motorantriebe, Erder, Anbauten, Abstützungen und Meßeinrichtungen aufweisen, entweder dreiphasig gemeinsam gekapselt oder dreiphasig mit einzeln gekapselten Phasen aufzubauen, wobei die metallene Kapselung in der Regel rohrförmig gestaltet ist (DE 37 38 329, US 3 889 076). Bei Anlagen mit einer dreiphasigen, rohrförmig gekapselten Sammelschiene ist es auch üblich, die einzelnen von der Sammelschiene abzweigenden Schaltfelder einphasig gekapselt auszuführen und zum Abzweig der einzelnen gekapselten Phasen von der dreiphasigen Sammelschiene ein rohrförmiges Kapselteil zu verwenden, welches an seiner zylindrischen Mantelfläche drei in Achsrichtung des Kapselteils nebeneinander angeordnete Abzweigflansche aufweist (DE-Z "Siemens-Zeitschrift 51, 1977, Seiten 45 bis 50).

Ausgehend von einer metallgekapselten, gasisolierten Hochspannungsanlage mit den Merkmalen des Patentanspruches 1 oder des Patentanspruches 2 liegt der Erfindung die Aufgabe zugrunde, die Variationsmöglichkeiten bei der Zusammenstellung einer solchen Anlage zu erweitern.

Zur Lösung dieser Aufgabe ist für eine Anlage mit einer dreiphasigen, rohrförmig gekapselten Sammelschiene vorgesehen, daß die im Zuge der Sammelschiene angeordneten aktiven Bausteine einphasig gekapselt ausgebildet und jeweils drei gleichartige Bausteine in bezug auf die Längsachse der Sammelschiene im wesentlichen auf derselben Höhe nebeneinander angeordnet sind und daß die rohrförmige Kapselung der Sammelschiene unmittelbar vor und hinter der Baustein-Anordnung ein Übergangsteil aufweist, welches im wesentlichen aus einem Eingangsflansch und aus drei Ausgangsflanschen besteht. Für eine Anlage mit einer Sammelschiene aus drei einzeln rohrförmig gekapselten Phasenleitern ist in analogerweise vorgesehen, daß jeweils drei parallel zueinander angeordnete Bausteine mit einer gemeinsamen rohrförmigen Kapselung umgeben sind und daß beidseits der gemeinsamen rohrförmigen Kapselung ein Übergangsteil angeordnet ist, welches die bereits erwähnte Zuordnung von Flanschen aufweist.

Bei einer derartigen Konzeption der Hochspannungsanlage kann im Bereich der Sammelschiene unter Verwendung eines speziellen Übergangsteiles ein gemischter Aufbau aus einphasig- und dreiphasig-gekapselten Anlagenteilen erfolgen. Insbesondere können aus einphasigen Systemen vorhandene aktive Bausteine (z. B. Trennschalter) in eine dreiphasige Sammelschiene integriert werden, wodurch sich die Herstellung eines speziellen dreiphasigen Bausteines (z. B. eines dreiphasigen Trennschalters) erübrigt. Auch können Ergänzungsbauelemente des einphasigen Systems wie Motorantriebe, Erder, Abstützugen und Meßeinrichtungen verwendet werden.

Um den Übergang von einem Systemteil mit gemeinsamer Kapselung der drei Phasen auf ein Systemteil mit einzeln gekapselten Phasen möglichst platzsparend vornehmen zu können, ist in weiterer Ausgestaltung der Erfindung vorgesehen, daß das Übergangsteil aus einem hohlen, halbkugelartigen Grundkörper besteht, der im Bereich seiner Schnittfläche unter Zwischenschaltung eines kurzen Rohrstutzens mit dem Eingangsflansch und im Bereich seiner Oberfläche unter Zwischenschaltung jeweils eines kurzen Rohrstutzens mit den drei Ausgangsflanschen versehen ist. Einen Übergang mit besonders geringen Platzbedarf erhält man, wenn die Mittelachsen zweier Ausgangsflansche parallel zueinander angeordnet und gegenüber der Mittelachse des Eingangsflansches geneigt angeordnet sind und wenn die Mittelachse des dritten Ausgangsflansches entgegengesetzt zu den Mittelachsen der beiden anderen Ausgangsflansche um den gleichen Winkel gegen die Mittelachse des Eingangsflansches geneigt ist.

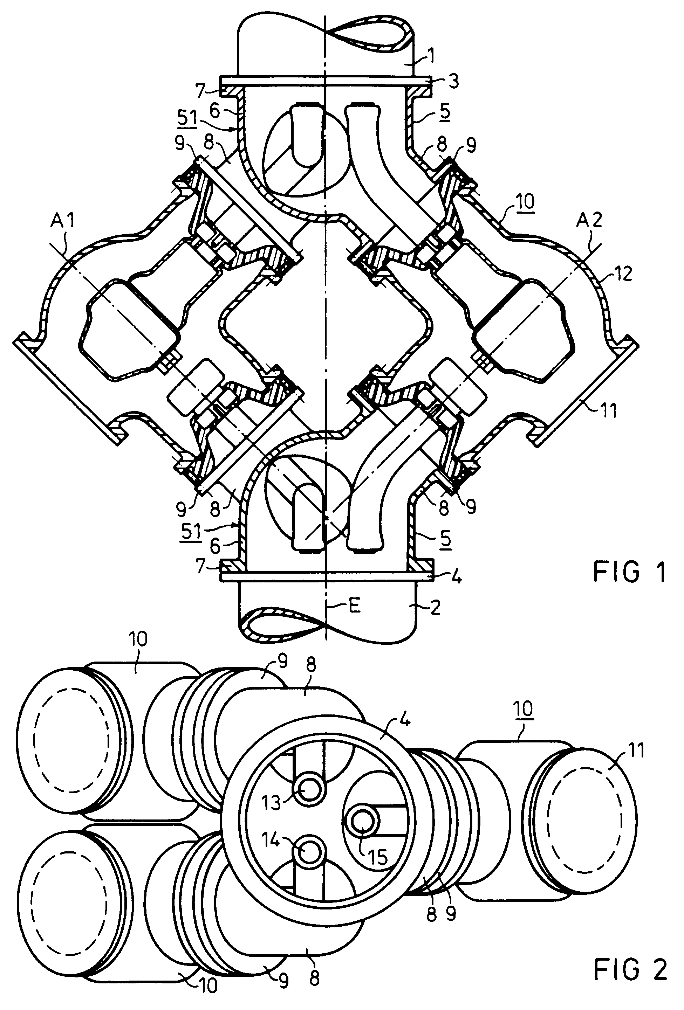

Ein Ausführungsbeispiel der Erfindung mit den Merkmalen der Ansprüche 1, 3 und 4 ist in den Figuren 1 und 2 dargestellt. dabei zeigt
- Figur 1: einen Ausschnitt aus einer dreiphasigen Sammelschiene mit gemeinsamer rohrförmiger Kapselung, wobei im Zuge der Sammelschiene drei einphasig gekapselte Trennschalter angeordnet sind, und
- Figur 2: eine Ansicht dieses Abschnittes der Sammelschiene mit Blick auf den Eingangsflansch des Übergangsteiles.

Figur 1 zeigt in schematischer Darstellung den Ausschnitt aus einer dreiphasigen Sammelschiene mit den Kapselungsabschnitten 1 und 2, die an den Endflanschen 3 und 4 enden. An jedem Endflansch 3 und 4 ist ein Übergangsteil 5 angeflanscht, mit dem der Übergang auf drei einzeln gekapselte Phasen erfolgt. Das Übergangsteil 5 besteht hierbei aus einem hohlen, halbkugelartigen Grundkörper 51, an dessen Schnittfläche über einen kurzen Rohrstutzen 6 der Eingangsflansch 7 angeordnet ist. Auf der Oberfläche des Grundkörpers 51 sind drei kurze Rohrstutzen 8 angeordnet, die jeweils an einem Ausgangsflansch 9 enden. Dabei sind zwei Ausgangsflansche 9, die in der Zeichenebene übereinander liegen, so angeordnet, daß deren Mittelachsen A1 mit der Mittelachse E des Eingansflansches 7 einen Winkel von etwa 45° bilden, während die Mittelachse A2 des anderen in der Zeichung sichtbaren Ausgangsflansches 9 in entgegengesetzter Richtung um den gleichen Winkel gegen die Mittelachse E des Eingangsflansches 7 geneigt ist.

An jeweils zwei einander zugeordnete Ausgangsflansche 9 der beiden Übergangsteile 5 ist ein winkelförmiges Kapselungsteil 10 angesetzt, bei dem es sich um das Gehäuse eines aktiven Bausteines, beispielsweise eines Trennschalters handelt. Anstelle des in der Zeichnung dargestellten Deckels 11 kann für diesen Fall beispielsweise ein Erder angeordnet sein, während im Bereich der Wölbung 12 eine stärkere Gehäuseauswölbung zur Aufnahme eines Antriebs des Trennschalters vorgesehen sein kann.

Anstelle des winkelförmigen Kapselungsteiles 10 können auch rohrförmige Kapselungsteile vorgesehen sein, die dann über spezielle Winkelstücke an die Ausgangsflansche 9 der Übergangsteile 5 anzuschließen sind.

Figur 2 zeigt eine Ansicht der Anordnung nach Figur 1, wobei der Eingangsflansch 7 des Übergangsteiles 5 in der Zeichenebene liegt. Gut zu sehen ist die parallele Anordnung von zwei Ausgangsflanschen 9, während der dritte Ausgangsflansch 9 entgegengesetzt zu den anderen beiden Ausgangsflanschen gegen die Mittelachse des Eingangsflansches 7 geneigt von dem halbkugelartigen Grundkörper des Übergangsteiles 5 abzweigt. - Die Phasenleiter 13, 14 und 15, die aus der gemeinsamen Kapselung 1 bzw. 2 auf kürzestem Weg ohne zusätzliche Abstützung in die Ausgangsflansche 9 hineingeführt sind, sind schematisch angedeutet.

Unter einem "halbkugelartigen" Grundkörper wird ein Körper verstanden, dessen Oberfläche gegebenenfalls von der Kugelform abweicht, beispielsweise nach Art eines Ellipsoides.

## Patentansprüche

1. Metallgekapselte, gasisolierte Hochspannungsanlage mit einer dreiphasigen, rohrförmig gekapselten Sammelschiene und mit im Zuge der Sammelschiene angeordneten aktiven Bausteinen (10) für den Betrieb der Anlage,
**dadurch gekennzeichnet,**
daß die Bausteine (10) einphasig gekapselt ausgebildet und jeweils drei gleichartige Bausteine in bezug auf die Längsachse der Sammelschiene im wesentlichen auf derselben Höhe nebeneinander angeordnet sind
und daß die rohrförmige Kapselung (1, 2) der Sammelschiene unmittelbar vor und hinter der Baustein-Anordnung ein Übergangsteil (5) aufweist, welches im wesentlichen aus einem Eingangsflansch (7) und aus drei Ausgangsflanschen (9) besteht.

2. Metallgekapselte, gasisolierte Hochspannungsanlage mit einer Sammelschiene aus drei einzeln rohrförmig gekapselten Phasenleitern (13-15) und mit im Zuge der Sammelschiene nebeneinander angeordneten aktiven Bausteinen (10) für den Betrieb der Anlage,
**dadurch gekennzeichnet,**
daß jeweils drei nebeneinander angeordnete Bausteine (10) von einer gemeinsamen rohrförmigen Kapselung (1,2) umgeben sind
und daß beidseits der gemeinsamen rohrförmigen Kapselung ein Übergangsteil (5) angeordnet ist, welches im wesentlichen aus einem Eingangsflansch (7) und aus drei Ausgangsflanschen (9) besteht.

3. Hochspannungsanlage nach Anspruch 1 oder 2,
**dadurch gekennzeichnet,**
daß das Übergangsteil aus einem hohlen, halbkugelartigen Grundkörper (51) besteht, der im Bereich seiner Schnittfläche unter Zwischenschaltung eines kurzen Rohrstutzens (6) mit dem Eingangsflansch (7) versehen ist und der im Bereich seiner Oberfläche unter Zwischenschaltung jeweils eines kurzen Rohrstutzens (8) mit den drei Ausgangsflanschen (9) versehen ist.

4. Hochspannungsanlage nach Anspruch 3,
**dadurch gekennzeichnet,**
daß die Mittelachsen (A1) zweier Ausgangsflansche (9) parallel zueinander angeordnet und gegenüber der Mittelachse (E) des Eingangsflansches (7) geneigt angeordnet sind
und daß die Mittelachse (A2) des dritten Ausgangsflansches (9) entgegengesetzt zu den Mittelachsen (A1) der beiden anderen Ausgangsflansche (9) um den gleichen Winkel gegen die Mittelachse (E) des Eingangsflansches (7) geneigt ist.

## Claims

1. A metal-clad, gas-insulated, high-voltage switchgear with a three-phase, tubular-clad busbar and with active components (10) arranged in the course of the busbar for operating the switchgear, characterised in that the components (10) are constructed so as to be single-phase clad components and three like components are arranged adjacent one another at essentially the same height relative to the longitudinal axis of the busbar, and the tubular cladding (1, 2) of the busbar comprises a transition element (5) directly in front of and behind the component arrangement, which transition element essentially comprises an inlet flange (7) and three outlet flanges (9).

2. A metal-clad, gas-insulated high-voltage switchgear with a busbar comprising three tubular-clad phase conductors (13-15) and with active components (10) arranged in the course of the busbar for operating the switchgear, characterised in that three components (10) arranged adjacent one another are enclosed by a common tubular cladding (1, 2) in each case, and a transition element (5) is arranged on either side of the common tubular cladding, which transition element essentially comprises an inlet flange (7) and three outlet flanges (9).

3. A high-voltage switchgear according to claim 1 or 2, characterised in that the transition element comprises a hollow, hemispherical base element (51), which is provided in the region of its cross sectional surface with the inlet flange (7) with the interposition of a short pipe socket (6), and which is provided in the region of its outer surface with the three outlet flanges (9), in each case with the interposition of a short pipe socket (8).

4. A high-voltage switchgear according to claim 3, characterised in that the centre axes (A1) of two outlet flanges (9) are arranged parallel to one another and are inclined relative to the centre axis (E) of the inlet flange (7), and the centre axis (A2) of the third outlet flange (9) is inclined by the same angle in the opposite direction to the centre axes (A1) of the two other outlet flanges (9) relative to the centre axis (E) of the inlet flange (7).

## Revendications

1. Installation haute tension à blindage métallique et à isolation par un gaz, comportant une barre omnibus triphasée de la forme d'un tuyau et à blindage métallique ainsi que des composants actifs (10) pour la mise en oeuvre ou l'exploitation de l'installation et qui sont disposés dans l'extension de ladite barre omnibus,
caractérisée par le fait que les composant (10) sont réalisés avec un blindage monophasé, trois composants identiques étant disposés, par rapport à l'axe longitudinal de la barre omnibus, sensiblement sur le même niveau et côte et à côte, et que le blindage en forme de tube ou blindage tubulaire (1, 2) de la barre omnibus présente, directement en amont et en aval de l'agencement des composants, un élément de transition (S) qui est constitué, pour l'essentiel, par un flasque d'entrée (7) et par trois flasques de sortie (9).

2. Installation haute tension à blindage métallique et à isolation par un gaz, comportant une barre omnibus constituée par trois conducteurs de phases (13-15) blindés individuellement de façon tubulaire, ainsi que des composants actifs (10) qui sont disposés le long de l'extension de la barre omnibus et les uns à côté des autres, pour la mise en oeuvre et l'exploitation de l'installation, caractérisée par le fait que respectivement trois composants (10) qui sont disposés les uns à côté des autres, sont entourés par un blindage tubulaire commun (1, 2) et que de part et d'autre du blindage tubulaire commun, est prévu un élément de transition (5) et qui est constitué, pour l'essentiel, par un flasque d'entrée (7) et par trois flasques de sortie (9).

3. Installation haute tension selon la revendication 1 ou 2, caractérisée par le fait que l'élément de transition est constitué par un corps de base (51) qui est creux et de forme semi-sphérique, lequel corps de base est pourvu dans la zone de sa surface de coupe et avec interposition d'un embout tubulaire court (6), d'un flasque d'entrée (7), et qui, dans la zone de sa surface supérieure, et avec interposition respectivement d'un embout tubulaire court (8), est pourvu des trois flasques de sortie (9).

4. Installation haute tension selon la revendication 1, caractérisée par le fait que les axes médians (A1) de deux flasques de sortie (9) sont disposés parallèlement entre eux avec inclinaison par rapport à l'axe médian (E) du flasque d'entrée (7), et que l'axe médian (A2) du troisième flasque de sortie (9) est incliné en opposition par rapport à l'axe médian (A1) des deux autres flasques de sortie (9), d'un même angle par rapport à l'axe médian (E) du flasque d'entrée (7).
